# EUROPEAN PATENT SPECIFICATION

(11) **EP 2 177 636 B1**
(45) Date of publication and mention of the grant of the patent: **02.11.2011**
(21) Application number: 10000646.9
(22) Date of filing: 14.12.2005
(51) Int. Cl.: C22B 34/12, C01G 23/00, C22C 1/00

(54) **A method of producing titanium powder**
Verfahren zur Herstellung des Titanpulvers
Procédé de fabrication de poudre de titane

(30) Priority: 27.01.2005 ZA 200500819
(43) Date of publication of application: 21.04.2010
(62) Divisional of application: 05825346.9
(73) Proprietor: Peruke (Proprietary) Limited, 2001 Johannesburg (ZA)
(72) Inventor: Pretorius, Gerard, 0157 Lyttelton (ZA)
(74) Representative: Setna, Rohan P.

(56) References cited:
- PATENT ABSTRACTS OF JAPAN vol. 1996, no. 7, 31 July 1996 (1996-07-31) -& JP 08 073906 A (TOHO TITANIUM CO LTD; SUMITOMO SITIX CORP; SHOWA DENKO KK), 19 March 1996 (1996-03-19)
- PATENT ABSTRACTS OF JAPAN vol. 1995, no. 6, 31 July 1995 (1995-07-31) -& JP 07 076706 A (NIPPON STEEL CORP; OTHERS: 01), 20 March 1995 (1995-03-20)

## Description

### A METHOD OF PRODUCING TITANIUM

This invention relates to the production of titanium metal, titanium alloys and titanium compounds.

Titanium is usually commercially produced from titanium tetrachloride (TiCl₄) by the Hunter or Kroll processes. These processes involve a sodium or a magnesium reduction step. Titanium has also been produced by the reduction of potassium hexafluorotitanate (K₂TiF₆) with sodium, by the electrolytic reduction of titanium dioxide (TiO₂) and by the reduction of TiO₂ with magnesium or calcium. Titanium can accordingly be produced from a variety of titanium-containing precursors using a variety of reducing agents.

The density of titanium metal is about 45% of that of steel, however titanium is as strong as steel and has superior chemical resistance. Titanium is also the ninth most abundant element in the Earth's crust, but despite its abundance and superior properties, the world market for titanium is only 1% of the aluminium market and only 0.1 % of the stainless steel market. The reason for this is its price. Only limited markets such as the military, aerospace and medical markets can afford to use titanium. The main reasons why titanium metal is so expensive are because the precursors used in the production of titanium are expensive and because of high losses due to oxidation during the melting, casting and forging of the metal.

JP 08 073 906 discloses a modified Kroll process. JP 07 076 706 discloses a method of producing titanium powder.

The present invention provides an efficient and inexpensive process for the production of titanium, its alloys and its compounds.

According to the first aspect of the invention, there is provided a method of making titanium metal powder, the method including the step of
reducing TiF₃ with aluminium to produce a reduction product comprising titanium metal powder and AlF₃.

The method may include the further step of
heating the reduction product to a temperature and for a time which are sufficient to sublime off most of the AlF₃ but to cause retention of sufficient AlF₃ on the surface to reduce the reactivity of the titanium metal powder.

The method may include heating the reduction product until the AlF₃ on the surface of the titanium metal powder comprises between about 0,005 and 40% of the mass of the material, preferably between about 0,05 and 10% and more preferably between about 0,1 and 5,0%.

The residual AlF₃ causes an inert layer which is at least a monolayer thick to be formed on the surface of the titanium powder. This substantially increases the temperature at which spontaneous combustion of the titanium powder takes place in air from about 250°C to above 600°C. The powder is accordingly safer to use and transport than prior art titanium powders.

The invention extends to a deactivated titanium powder having a surface layer of AlF₃ in which the AlF₃ comprises between about 0,05 and 10% of the mass of the material and preferably between about 0,1 and 5% AlF₃.

The invention extends further to a method of making titanium metal powder the method including the steps of
reducing TiF₃ with aluminium to produce a reduction product comprising titanium metal powder and AlF₃; and
heating the reduction product to sublime off the AiF₃ to produce a titanium metal powder containing essentially no aluminium in metal or alloy form.

Alternative methods for the production of titanium metal, titanium alloys and titanium compounds are described herein.

According to a first aspect of the invention, there is provided a method of producing titanium metal from a titanium-containing material, the method including the steps of

Producing a solution of M^{II}TiF₆ from the titanium-containing material, selectively precipitating M^{I}₂TiF₆ from the solution by the addition of (M^{I})aXb

In which
M^{II} is a cation of the type which forms a hexafluorotitanate,
M^{I} **is** selected from ammonium and the alkali metal cations,
X is an anion selected from halide, sulphate, nitrite, acetate and nitrate, and
a and b are 1 or 2; and
using the selectively precipitated M^{I}₂TiF₆ to produce titanium.

In the case of nitrate, M^{II} will be In its highest oxidation state.

M^{II} may be selected from Fe²⁺, Me²⁺, Zn²⁺, Mg²⁺, Cu²⁺, Ca²⁺, Sr²⁺, Ba²⁺, Co²⁺ and Ni²⁺.

The alkall metal may be selected from lithium, sodium and potassium. Preferably. M^{II}TiF₆ will be FeTiF₆ and (M^{I})aXb will be NH₄Cl.

The titanium-containing material may be selected from ilmenite, rutite, anatase, perovskite, brookite, pseudo-brookite, sphene, leucoxene and titaniferous slags. Ilmenite is FeTiO₃. Rutile, anatase, brookite and leucoxene are all naturally occurring TiO₂-containing minerals. Titaniferous slag is a TiO₂-containing material produced largely from the smelting of ilmenite. Sphene is CaTiSiO₅ and perovskite is CaTi0₃.

When ores other than ilmenite or perovskite are used the ratio Ti:M^{II} will be adapted to be 1:1 or higher so that the molar amount of M^{II} is at least equal to that of the Ti or higher. This can be achieved by either the addition of Ti or by the addition of M^{II}.

The M^{II}TiF₆ may thus be FeTiF₆ and the solution of FeTiF₆ may be produced by the digestion of ilmenite with aqueous HF.

The ilmenite may be used in excess. The concentration of the HF may be between about 5 and 60 %. Preferably, it will be between about 20 and 24%.

The method may include the step of adding a reducing agent to the solution produced in the digestion step to reduce at least some of any Fe (III) present in the solution to Fe(II).The reducing agent may be a metal reducing agent. The metal may be selected from Fe, for example in the form of iron filings or steel wool, Al, Zn, Cu, Mn and Mg.

The method may include adding the (M^{I})aXb in the solid state to the solution produced in the digestion step.

The method may include the further step of purifying the M^{II}TiF₆ by recrystallisation.

When the M^{I}₂-TiF₆ is (NH₄)TiF₆, the method may include dissolving the (NH₄)₂TiF₆ in water to produce a solution and precipitating Ll₂Ti₆, Na₂TiF₆ or K₂TiF₆ by the addition of a lithium, sodium or potassium salt to the solution. The salt may be selected from alkali metal chlorides and sulphates but, naturally, any other suitable alkali metal salt may be used. Preferably the salt will be sodium chloride or sodium sulphate.

The method may then include the step of reducing the Li₂TiF₆, Na₂DF₆, or K₂TiF₆ to produce titanium. This route is referred to below as Option A. The reduction may be carried out with a reducing agent selected from sodium, magnesium, potassium and calcium. In this case the method may include, prior to the reduction step, the step of mixing the Na₂TF₆ with a predetermined quantity of at least one other metal salt so that the titanium produced in the reduction step is in the form of a titanium alloy containing at least one other metal. The other metal salt may, for example be Na₃AiF₆ or Na₂VF₇ or a combination thereof so that the titanium alloy produced contains aluminium or vanadium or both.

The method may Include, for example, adding sufficient Na₃AlF₆ and Na₂VF₇ to produce grade 5 titanium (which contains about 6% aluminium and about 4% vanadium). Naturally other metal fluoride salts such as AlF₃, VF₅, VF₄ or VF₃ could be used and the amount varied so that a variety of alloys can be prepared.

Where the titanium-containing material is a TiO₂₋containing material such as rutile, anatase, brookite, leucoxene or titaniferous slag In which M^{II} is low, the method may include the steps of first forming an aqueous HF solution of the M^{II} salt and then digesting the titanium-containing material in the acidic solution of the M^{II} salt to produce the solution of M^{II}TiF₆**.**

In the preferred route, the method may Include the step of reducing the (NH₄)₂TiF₆, in which the titanium is in the oxidation state IV. to produce a titanium-III product, decomposing the titanium-111 product to produce TiF₃ and reducing the TiF₃ to titanium. This route is referred to below as Option B.

The (NH₄)₂TiF₆ may be reduced to the Ti(III) product with a reducing agent selected from aluminium, manganese, zinc, Iron and magnesium. Instead, the (NH₄)₂TF₆ may be electrolytically reduced to produce the Ti(III) product.

The Ti(III) product, for example, may be (NH₄)₃TiF₆, (NH₄)₂TiF₅. or NH₄TiF₄. All of these compounds decompose between about 400 and 700°C to produce TiF₃.

The TiF₃ may be reduced to titanium by reduction with a reducing agent selected from sodium, magnesium and aluminium.

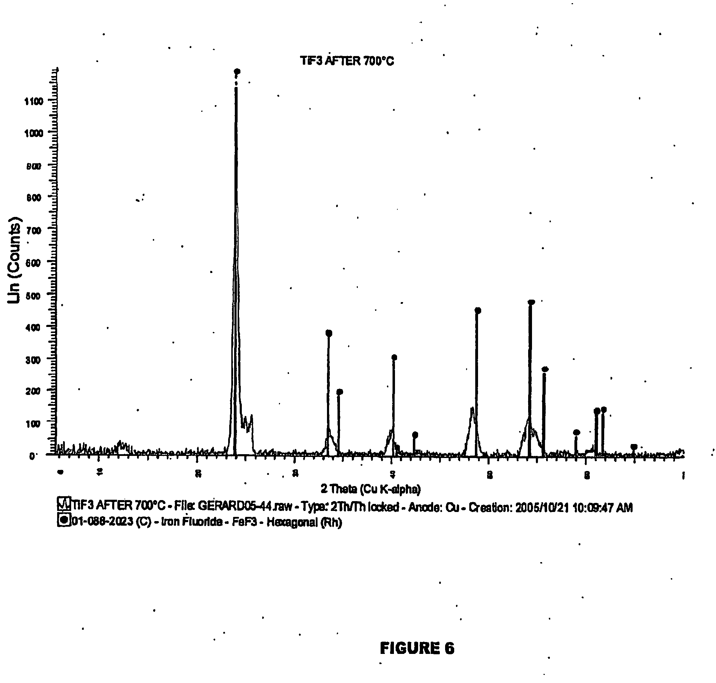

TiF₃ may be produced by the pyrolytic decomposition of NH₄TiF₄. TiF₃ having an x-ray diffraction pattern is shown in Figure 6.

A method is described of producing titanium metal from a TiO₂₋containing material, the method including the steps of
preparing an aqueous hydrofluoric acid solution containing M^{II},
digesting the TiO₂-ontaining material in the solution to produce a solution containing M^{II}TiF₆,
selectively precipitating M^{I}₂TiF₆ from the solution by the addition of (M^{I})aXb in which
M^{II} is a cation of the type which forms a hexafluorotitanate,
M^{I} is selected from ammonium and the alkali metal cations,
X is an anion selected from halide, sulphate, nitrite, acetate and nitrate, and
a and b are 1 or 2; and
using the selectively precipitated M^{I}₂TiF₆ to produce titanium.

The TiO₂-containing material may be selected from rutile, anatase, brookite, leucoxene and titaniferous slag. However, any other suitable TiO₂-containing material may be used.

The aqueous hydrofluoric acid solution containing M^{II} may be prepared by dissolving a basic salt of M^{II} in aqueous HF. The basic salt may for example be the oxide, hydroxide or carbonate of M^{II}.

In a preferred embodiment, M^{I} will be NH₄⁺ and the method will include reducing the optionally purified (NH₄)₂TiF₆ to NH₄TiF₄;
pyrolizing the NH₄TiF₄ to produce TiF₃; and
reducing the TiF₃ to titanium metal.

There is described a method of forming a metal alloy, the method including the steps of
combining a predetermined amount of a reducible fluoride salt of a first metal with a predetermined amount of at least one reducible salt of another metal to produce a salt mixture and
reducing the fluoride salt mixture to produce a mixture of the metals or an alloy.

The method may include combining the fluoride salt of the first metal with two or more reducible salts of other metals so that an alloy containing three or more metals is produced.

The reducible fluoride salt of the first metal may be a reducible salt of titanium. The reducible salt of the other metal may be a reducible salt of metals selected from vanadium, aluminium, palladium, molybdenum and nickel.

The reducible salt of the first metal may, in particular, be M₂TiF₆ and the reducible salt of the other metal may be selected from M₃AlF₆, M₂VF₇ and combinations thereof in which M is an alkali metal. In particular, M may be sodium.

The method may include the further step of smelting the mixture to produce the alloy.

There is provided a salt which is NH₄TiF₄.

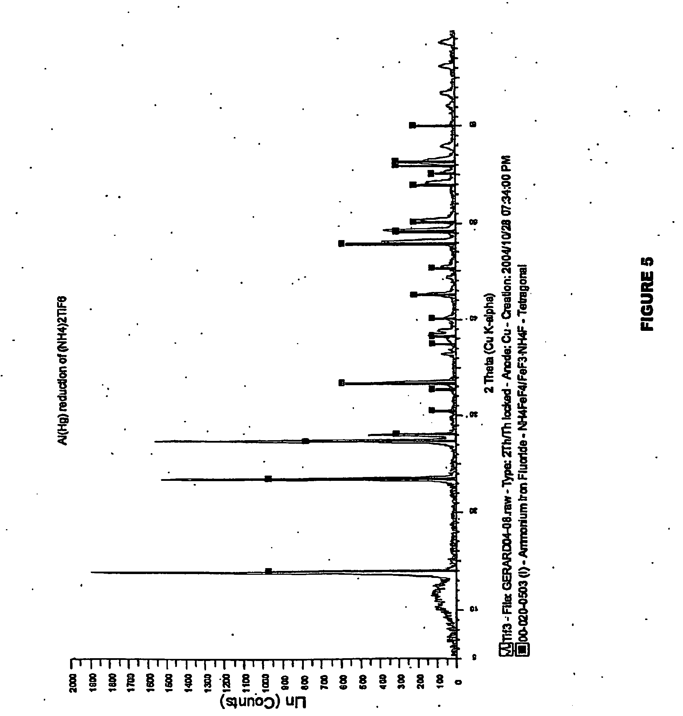

NH₄TiF₄ having an x-ray diffraction pattern is shown in Figure 5.

There is described a method of making NH₄TiF₄ the method including the step of reducing (NH₄)₂TiF₆.

The reducing agent may be a metal reducing agent, it may, for example, be aluminium, an aluminium amalgamate, mercury coated aluminium eg Al(Hg) or aluminium carbide.

There is descibed a method of preparing a titanium artifact from a titanium metal precursor material, which includes the steps of subjecting the titanium metal precursor material to a heating step to produce a titanium metal intermediate material and subjecting the intermediate material to one or more process steps to produce the artifact, there is provided the improvement of conducting the heating step in an atmosphere containing a volatile fluoride salt.

The titanium metal intermediate material produced will thus have a protective layer of the fluoride salt.

The atmosphere will preferably be an inert atmosphere such as an argon or helium atmosphere. The titanium metal precursor material may be deactivated titanium powder as hereinbefore described.

The volatile fluoride salt may be selected from AlF₃, MgF₂ and NaF. Naturally, any other suitable fluoride salt may be used.

The heating step may be by firing or furnace heating using, for example, vacuum furnaces, inert gas furnaces, microwave assisted furnaces, radio frequency assisted furnaces, induction furnaces or zone refining furnaces.

The process steps may be standard process steps of the type used in the fabrication of titanium artifacts such as uniaxial pressing, cold isostatic pressing, hot isostatic pressing, cold rolling, hot rolling and the like. The process steps may include the addition of sacrificial binders such as waxes and polymers.

The titanium artifact may be a solid material or a porous material. It may be an alloy of titanium and may be selected from rods, bars, wires, sheets and the like.

The titanium artefact may contain trace quantities of fluoride. By trace quantities is meant quantities which do not affect the bulk properties of the titanium.

The furnace arrangement and heating cycle will be such that during the heating step the titanium is always surrounded by a protective atmosphere containing the fluoride salt so that it is protected from reaction with oxygen, nitrogen, carbon, hydrogen or the like.

There is described a method of recovering titanium from ilmenite, the method including the steps of
digesting ilmenite in aqueous HF to produce FeTiF₆ and removing insoluble material;
selectively precipitating (NH₄)₄TiF₆ by addition of an ammonium salt,
optionally purifying the precipitated (NH₄)₂TiF₆;
reducing the optionally purified (NH₄)₂ TiF₆ to NH₄TiF₄ with mercury activated aluminium;
pyrolizing the NH₄TiF₄ to produce TiF3; and
reducing the TiF₃ to titanium metal.

There is described a method of recovering titanium from a TiO₂-containing material, the method including the steps of
preparing an aqueous hydrofluoric acid solution containing M^{II},
digesting the TiO₂-containing material in the solution to produce a solution containing M^{II}TiF₆ and removing Insoluble material;
selectively precipitating (NH₄)₂TiF₆ by addition of an ammonium salt;
optionally purifying the precipitated (NH₄)₂TiF₆
reducing the optionally purified (NH₄)₂TiF₆ to NH₄TiF₄ with mercury activated aluminium;
pyrolizing the NH₄TiF₄ to produce TiF₃; and
reducing the TiF₃ to titanium metal.

The TiO₂ containing material may be selected from anatase, rutile, brookite, leucoxene and titaniferous slag.

There is described a method of making a titanium compound selected from titanium nitride, titanium carbide, titanium boride, titanium hydride, titanium silicide, titanium phosphide and titanium sulphide, the method including the step of
heating a deactivated powder as hereinbefore described with a source of nitrogen, carbon, boron, hydrogen, silicon, phosphorous or sulphur.

The source of nitrogen, carbon, hydrogen, silicon or sulphur may be the corresponding elements, for example nitrogen and hydrogen as the gas, carbon as powder or coke, silicon as powdered silicon and sulphur as powdered sulphur.

The source of boron may be diborane. The source of phosphorous may be phosphine.

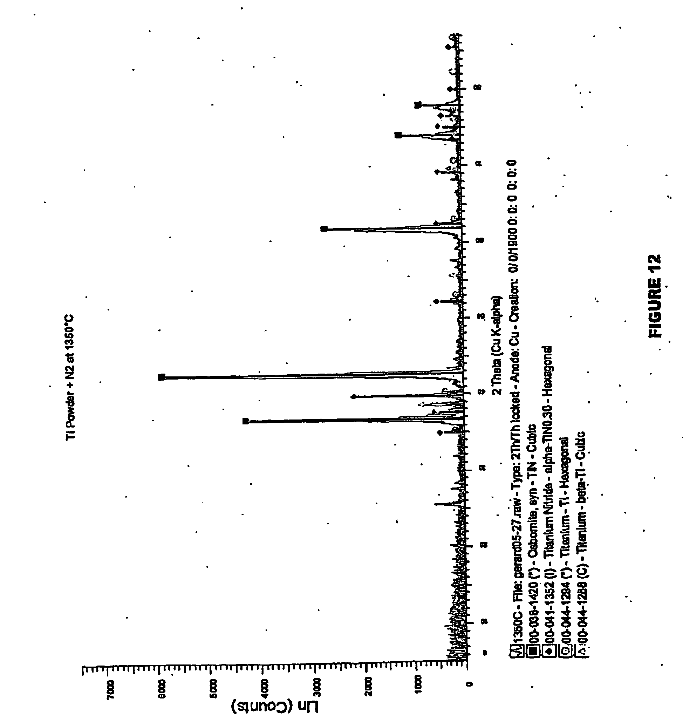

The titanium nitride may have an x-ray diffraction pattern as set out in Figure 12.

### DISCUSSION

Prior art methods for the digestion of ilmenite have made use of either sulphuric acid or chlorine and coke at high temperatures. It is also known that ilmenite can be digested in dilute HF in an exothermic reaction according to the equation:

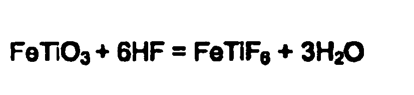

The dilution of the HF was controlled at 20 - 24% so that a saturated solution of FeTiF₆, which could be filtered to remove insoluble material, was produced. It was found that the yield and purity of the FeTiF₆ precursor produced in the selective precipitation step could be improved if all of the iron in solution was in oxidation state II (ie if no Fe³⁺ was present) and if no free HF was present This was achieved by using an excess of ilmenite, which could then be recycled, and by the addition of metallic iron filings to the solution after digestion. The addition of iron filings reduced Fe³⁺ to Fe²⁺ according to the equation:

Fe⁰ + 2Fe³⁺ = 3Fe²⁺

If too much iron was added, reduction of Ti⁴⁺ to Ti³⁺ occurred and this had a negative influence on the yield. It was found that copper filings could first be added to a small sample portion of the leachate to reduce the Fe³⁺ to Fe²⁺ without reducing the Ti⁴⁺ and the correct amount of metallic iron could then be calculated.

The (M^{I})aXb was preferably added in the form of the dry salt. For example, if a saturated solution of M^{II}TiF₆,6H₂O, in which M^{II} is Fe²⁺. Mn²⁺, Zn²⁺, Mg²⁺, Cu²⁺ or the like is mixed with the dry salt of M^{I}Cl, in which M^{I} is Li⁺ Na⁺,K⁺ or NH₄⁺, the M^{I}₂TiF₆ intermediate precipitates almost quantitively from the solution while the M^{II}Cl₂, which is co-produced in the reaction, remains in solution. This is a not unexpected result in the case of K₂TiF₆ which has a low solubility, but such a near-quantitative precipitation in respect of Li₂TiF₆, and (NH₄)₂TiF₆, both of which are highly soluble in water, is particularly unexpected.

It was also found that, for the (NH₄)₂TiF₆ to precipitate quantitatively, 4 moles of NH₄Cl had to be added to 1 mole of M^{II}TiF₆. This can be explained by the co-formation of the (NH₄)₂M^{II}Cl₄ double salts. This would also be expected in the case of potassium, however, because of its low solubility, K₂TiF₆ precipitates in preference to the formation of the K₂M^{II}-double salt. Consequently, only 2 moles of KCl or 1 mole of K₂SO₄ was needed to precipitate K₂TiF₆ almost quantitively. The same applied in respect of Li⁺ and Na⁺ which do not form double salts with M^{II}. Chloride was used in preference to SO₄²⁻ because of its higher solubility and easier recycling loops. Other anions like CH₃COO-, NO²⁻, and the like can also be used for selective precipitation but NO³⁻ is not suitable because it causes oxidation of Fe²⁺or Mn²⁺_{.}

The selective precipitation resulted in the removal of the bulk of the M^{II} so that, after filtration and washing, only low levels of M^{II} remained in the crystalline precipitate. In this way a relatively pure titanium precursor was obtained in high yield (>90%).

If the M^{I}₂TiF₆ was reduced directly, the iron level in the resulting titanium corresponded to that of grade 4 titanium (although the oxygen, nitrogen, carbon and hydrogen levels were very low). In order to reduce the iron content of the titanium to produce a metal having an iron level corresponding to that of grade 1 titanium or better, it was necessary to improve the purity of the precursors. Because of the low solubility of K₂TiF₆ and Na₂TiF_{6,} recrystallisation was not practical and these salts were purified by solvent extraction with methyl isobutyl ketone (MIBK) and HCl. It was more practical to selectively precipitate the highly soluble Li₂TiF₆ or (NH₄)₂TiF₆ salts as these could readily be recrystallised. Of the two salts, it was more economical to use (NH₄)₂TiF₆. It was also found that boiling saturated solutions of (NH₄)₂TiF₆ did not result in hydrolysis of the salt (which is unusual for water-soluble titanium salts) and a high concentration could accordingly be obtained so that a maximum yield of the crystalline product could be obtained on cooling. Very pure titanium precursors were obtained in this way and were pure enough to be used as precursors in the production of TiO₂ pigments. The titanium metal produced on reduction of the purified (NH₄)₂TiF₆ was purer than commercial grade 1 titanium.

After the (NH₄)₂TiF₆ has been purified by recrystallisation, two approaches can be followed to produce titanium metal. The first approach (Option A) involves the reduction of Na₂TiF₆ or K₂TiF₆ produced from the (NH₄)₂TiF₆.

Because of the difference in solubility between (NH₄)₂TiF₆ and Na₂TiF₆ (or the corresponding potassium salt), Na₂TiF₆ can be precipitated from a saturated solution of (NH₄)₂TiF₆ by the addition of sodium chloride. The NH₄Cl produced as a byproduct can then be filtered from the precipitate and crystallised for re-use in the selective precipitation step.

After drying, the Na₂TiF₆ (mp. 700°C) can be reduced under an argon atmosphere. Reduction is exothermic at the melting point of the salt. Sodium or magnesium (10% stoichometric excess) is usually used as the reducing agent but potassium or calcium can also be used.

After reduction, the excess sodium or magnesium is boiled off at 900°C or 1100°C respectively. The respective products are 6NaF(Ti) or 2NaMgF₃(Ti).

The fluoride-titanium mixture is then fed into a vertically arranged elongate tubular zirconia or molybdenum crucible under an argon atmosphere. The top of the crucible is heated to 1300°C and the bottom to 1700°C. The bulk of the molten 6NaF (mp. 990°C) or 2NaMgF₃ (mp. 1030°C) is tapped from the crucible above the molten titanium and the remainder of the molten fluoride acts as a blanket on top of the molten titanium (mp1670°C) to protect it from oxygen and nitrogen.

The molten titanium is then cast into ingots or other products in a molten fluoride eutectic consisting, for example, of 40 mole % NaF and 60 mole % LiF (mp. 652°C), to allow for the titanium to anneal at 700°C. In this way the titanium is still protected against oxidation and nitrification during the annealing process.

The second approach to the production of titanium (Option B) involves the pre-reduction of (NH₄)₂TiF₆ to a Ti³⁺ species, conversion of the Ti³⁺ species to TiF₃ and reduction of the TiF₃ to titanium metal.

For example, the (NH₄)₂TiF₆ produced in the selective precipitation step can be reduced with Al (Hg-activated) or with Mn without the addition of an add. Typical products of the reduction are NH₄TiF₄ and (NH₄)₃AlF₆ or (NH₄)₂TiF₅ and MnF₂. In the case of reduction with aluminium, the (NH₄)₃AlF₆ is more soluble and can be removed from the almost insoluble NH₄TiF₄ precipitate by acid filtration. The latter can then be decomposed at 700°C to produce NH₄F (g) and TiF₃ (s). From the diluted (NH₄)₃AlF₆, Na₃AlF₆ (cryolite) can be precipitated as a by-product with NaCl and the resulting ammonium salt can be recycled.

With the addition of acid (usually HF), other reducing agents such as Zn, Al, Mn, Fe or Mg can be used. A typical product is (NH₄)₂HTiF₆ which is freely soluble in acid (pH 1-2) while the reducing agent-fluorides are much less soluble and can be separated from the (NH₄)₂HTiF₆ by filtration. Raising the pH with NH₄OH (pH 6) precipitates (NH₄)₂TiF₆. After filtration and drying, the product can be decomposed at 700°C to produce 3NH₄F(g) and TiF₃ (s).

However, an alternative option is to reduce (NH₄)₂TiF₆ electrolytically. A membrane such as a canvas membrane is used to separate the anode from the cathode. Normally a lead anode and a graphite cathode are used. The anode side is filled with 0.1 N HF solution and the cathode side is filled with a saturated (NH₄)₂TiF₆ solution, acidified with HF to pH 1. The electrolytic reactions are as follows:

| | |
|---|---|
| Anode: | H₂O =½O₂ (g) + 2H+ (aq) + 2e⁻ |
| Cathode: | 2Ti⁴⁺ (aq) + 2e⁻ = 2Ti³⁺ (aq) |

After electrolysis, the pH of the violet (NH₄)₂HTiF₆ solution is increased by addition of NH₄OH to pH 6 to precipitate (NH₄)₃TiF₆. After filtration and drying, the product can be decomposed at 700°C to produce 3NH₄F (g) and TiF₃ (s). The Ti³⁺ is then reduced to titanium metal.

TiF₃ can be reduced with Na, Mg or Al to produce 3NaF(Ti), 1½MgF2(Ti) or AlF₃(Ti) respectively. The reduction of TiF₃ is less exothermic than the reduction of (Na,K)₂TiF₆ and occurs above 700°C.

As described above, the NaF or MgF₂ can be melted from the titanium while AlF₃ will sublime at 1300°C.

To ensure that there is no free HF present after the digestion step, a 30 ±10% excess ilmenite is maintained during digestion. Because of its coarseness and high density, the excess ilmenite settles out from the leachate and the light insoluble precipitate after digestion. The digested suspension is pumped off from the settled ilmenite and filtered. The filter cake is then re-slurried and screened through a 45µm screen. The top fraction (ilmenite) is recycled back into the digestion tank while the bottom fraction (mostly acid insolubles) is waste. In this way a digestion efficiency of greater than 90% is achieved.

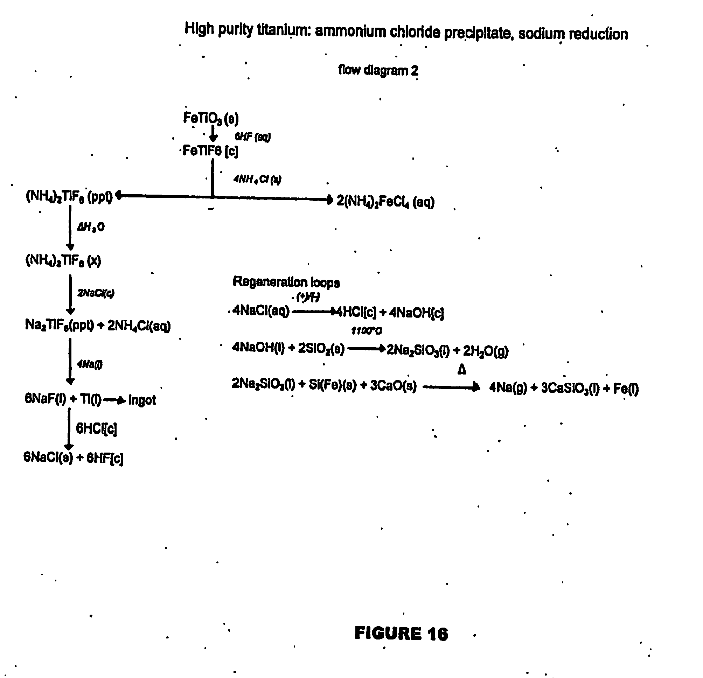

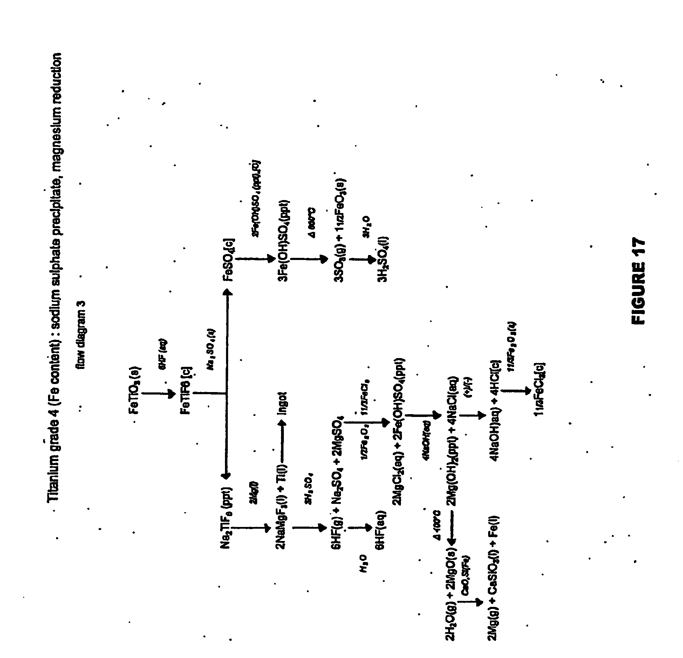

In the Option A process which proceeds via the reduction of Na₂TiF₆, the choice of the reducing agent determines the choice of the salt used for the selective precipitation. Sodium favours a chloride precipitate while magnesium favours a sulphate precipitate. The recycling loops are set out in Figures 16 and 17 which respectively show the production of high purity titanium and of grade 4 titanium.

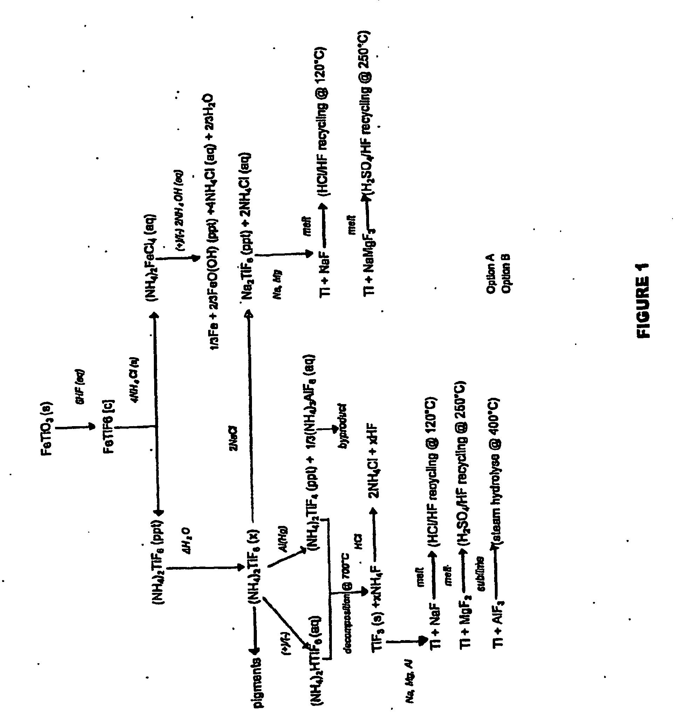

In the Option B process, which proceeds via the intermediate reduction of Ti⁴⁺ to Ti³⁺, the recycling loops will be essentially the same as those for the Option A process as indicated in Figure 1. If an electrolytic pre-reduction (Ti⁴⁺ to Ti³⁺) is not used, the fluoride salts of the reducing agents would be by-products. If aluminium is used in the secondary reduction step (Ti³⁺ to Ti), the sublimed AlF₃ can be sold as a by-product or the fluoride values can be recovered by steam hydrolysis at 400°C according to the following equation

2AlF₃ + 3H₂O = Al₂O₃ + 6HF

Al₂O₃ will then be the by-product.

Fe₂O₃ is the major by-product of the process of the invention. If magnesium Is used as the reducing agent and not regenerated, Mg(OH)₂ or MgSO₄ will also be by-products.

The invention Is now described by way of example with reference to the following Examples, the Figures and Table 1, in which
Figure 1 is a general flow diagram of titanium production methods including that of the invention;

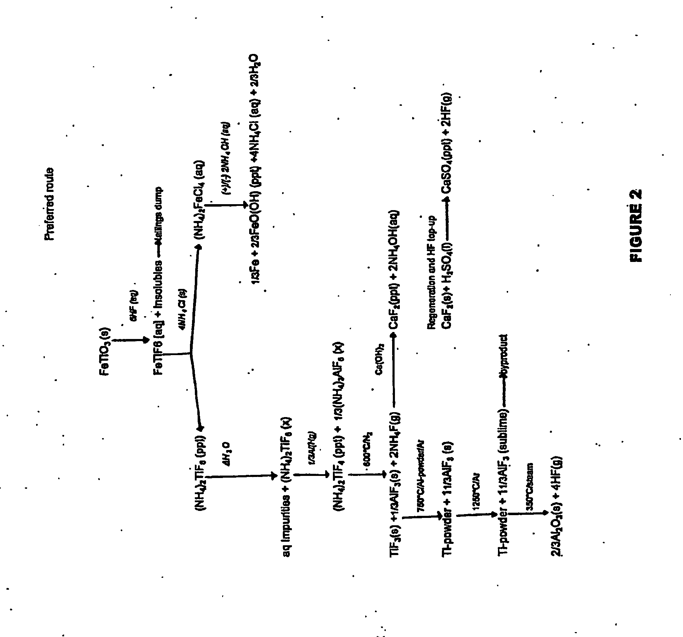

Figure 2 is a flow diagram for the preferred route;
Figure 3 is an x-ray diffraction pattern of electively precipitated (NH₄)₂TiF6;
Figure 4 is an x-ray diffraction pattern of the (NH₄)₂TiF₆ of Figure 3 after recrystallisation;
Figure 5 is an x-ray diffraction pattern of NH₄TiF₄ produced by the reduction of (NH₄)₂TiF₆ with Al(Hg);
Figure 6 is an x-ray diffraction pattern of TiF₃ produced by the decomposition of the NH₄TiF₄ of Figure 5;
Figure 7 shows superimposed x-ray diffraction patterns of standard samples of TiF₃ and FeF₃;
Figure 8 is an x-ray diffraction pattern of the reduction product of TiF₃ with aluminium at 750°C;
Figure 9 is an x-ray diffraction pattern of AlF₃ sublimed at 1250°C;
Figure 10 is an x-ray diffraction pattern of the product of Figure 8 after sublimation of AlF₃;
Figure 11 is an x-ray diffraction pattern of titanium metal produced from the powder of Figure 10;
Figure 12 is an x-ray diffraction pattern of titanium nitride formed by exposing the titanium powder of Figure 10 to nitrogen at 1350°C;
Figure 13 is an x-ray diffraction pattern of NH₄VF₄ produced by the reduction of (NH₄)₂VF₆ with Al(Hg);
Figure 14 is an x-ray diffraction pattern of VF₃ produced by the decomposition of the NH₄VF₄ shown in Figure 13;
Figure 15 shows the titanium powder of Figure 10 after soft sintering at 1250°C;
Figure 16 is a flow diagram of the sodium reduction route; and
Figure 17 is a flow diagram of the magnesium reduction route;
   and in which Table 1 shows the chemical composition, mechanical properties and physical properties of different grades of titanium.

With reference to Figure 1, the processes can be divided into five stages. These are the digestion of ilmenite, the selective precipitation of the titanium precursor produced in the digestion step, the reduction of the precursor, the melting of the reduced titanium product into an ingot and the recycling of the reagents used in the process.

Examples 3, 4, 5, 6, 7, 8, 9 and 10 are not in accordance with the present invention.

### EXAMPLE 1

### PRODUCTION OF TITANIUM FROM ILMENITE

### VIA Al(Hg) REDUCTION OF (NH₄)₂TiF₆

Step 5 is in accordance with the invention.

### STEP 1: DIGESTION OF ILMENITE WITH DILUTE HF

### Feed Material

Ilmenite concentrated was used as the feed material for the digestion step. The material contained about 89.5% ilmenite, 6% hematite, 2.5% quartz and 2% other metal oxides. The particle size was uniform and approximately 98% of the material had a particle size of between +45µm and -106µm. The material typically had the following chemical composition:

| Al | Ca | Fe | Mg | Mn | Si | Ti | V |
|---|---|---|---|---|---|---|---|
| 0.35% | 0.1% | 37.2% | 0.27% | 0.95% | 1.18% | 28.3% | 0.5% |

### Stoichiometry : HF required for 500g of ilmenite feed

The ilmenite used consisted of FeTiO₃ (89,5%), Fe₂O₃ (6,0%), SiO₂ (2.5%) and other material (2%). This corresponded to FeTiO₃ (447,5g; 2,95 mol), Fe₂O₃ (30g; 0,19 mol) and SiO₂ (12,5g; 0,21 mol) in 500g. The FeTiO₃, Fe₂O₃ and SiO₂ each require 6 mol of HF per mole for conversion, respectively, to FeTiF₆, FeF₃ and H₂SiF₆. The total amount of HF required was therefore (2,95 + 0,19 + 0,21) x 6 = 20,1 mol for the 98% feedstock.

However, to ensure complete digestion, an excess of 20% ilmenite was used during digestion. After the digestion, approximately 94% of the excess ilmenite could be recovered because of its high density and coarse particle size.

Batches were prepared as follows. In a 2ℓ polypropylene beaker, ilmenite (600g) was added to tap water (500 mℓ; 20°C). While stirring vigorously, HF (900mℓ; 40%) was added and a loose heavy plastic lid was placed on top of the beaker. The reaction was strongly exothermic and after about 10 minutes the suspension reached boiling point and boiled for about 5 minutes.

After 2 hours, Fe (12g; steel wool) was added to the solution and the mixture was stirred for 1 hour to reduce all soluble Fe(III) to Fe(II).

The suspension was then filtered and washed with tap water (2 x 50mℓ). Approximately 200g of moist filter cake was obtained. This material was ne-slunied to recover most of the excess ilmenite and a leachate of 1375mℓ containing FeTiF₆ was obtained.

### Extraction efficiency

The Ti concentration in the leachate was approximately lOOg/t implying a Ti recovery of 137.5g. The recovery efficiency was calculated as follows:
- Stoichiometry: 141.5g Ti (500g feed) = 97%
- 20% excess: 169.8g Ti (600g feed) = 81%
- 94% recovery of excess: 144g Ti (505g feed)= 95.5%

### STEP 2: SELECTIVE PRECIPITATION OF (NH₄)₂TiF₆

The leachate (1,375ℓ) contained Ti (137,5g; 2,865 mol). This required NH₄Cl (4 x 2,865 = 11,46 mol; 613,11g).

NH₄Cl (613g) was slowly added to the FeTiF₆ leachate of step 1 (1375mℓ) while stirring vigorously. The temperature dropped to below 10°C and was raised to 15°C using a warm bath. The suspension was then stirred for 1 hour at 15°C.

The resulting crystalline (NH₄)₂TiF₆ was filtered at 15 - 20°C, and pressed inside the filter head to remove as much excess liquid as possible. The vacuum was then broken and ice water (184mℓ; 5°C) was added to the product. The vacuum could be restored only after the water had penetrated the filter cake (approximately 2 minutes later) and the crystalline (NH₄)₂TiF₆ had the appearance of icing-sugar. The crystalline product was sucked and pressed as dry as possible.

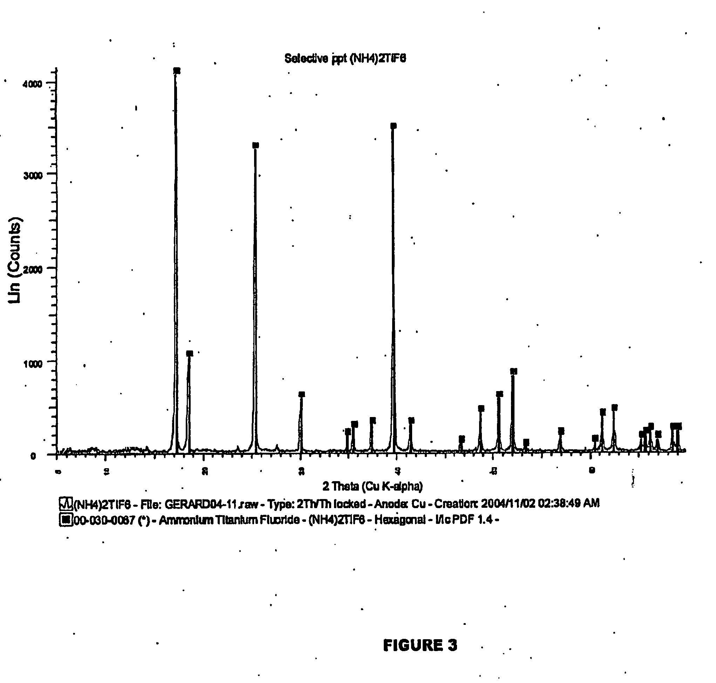

The crystalline (NH₄)₂TiF₆ was then dried at 60°C. The yield was 522g. The XRD of this product is shown in Figure 3.

### Precipitation efficiency

Based on a (NH₄)₂TiF₆ crystalline product with a purity of 100% (522g = 2.631 mol Ti), the efficiency of Ti recovery was 92%. The Fe concentration in the crystalline product was typically about 0,5 ±0,4%. Other impurities such as Si and Al were also present. However, these impurities could be removed by prior treatment of the feed before digestion (for example by caustic leaching) or by precipitation of these elements after digestion. For example, after Fe reduction, NaCl could be added to precipitate Na₂SiF₆ and Na₃AlF₆.

### Recrystallisation of (NH₄)₂TiF₆

(NH₄)₂TiF₆ (400g), produced as described above and dried at 60°C, was added to water (500mℓ) in a 2 litre vessel. It was found that anhydrous (NH₄)₂TiF₆ has a greater solubility than hydrated or moist (NH₄)₂TiF₆.xH₂O A small piece of Al strip (approx 100mm x 25 mm) was added to the suspension.

While stirring, HF (0,5mℓ; 40%) was added to the suspension to prevent hydrolysis and to initiate the reduction of a small amount of Ti(IV) with Al. The suspension was heated to boiling point (approx 100°C). Any foam which formed on top of the solution decreased with time and was mixed into the solution.

The colour of the solution changed to light violet, indicating the presence of Ti(III). This also indicated that all of the iron present was in the form of Fe(II). When the solution boiled, a layer of violet TiF₃ poisoned the Al strip and the reduction stopped. The formation of a small amount of (NH₄)₃NF₆ arising from the addition of the aluminium strip did not present a problem as this product is produced as a by product in the following step (Step 3). After the solution had boiled for about 1 minute, it was removed from the heat source and allowed to cool. The Al strip could then be removed and reused (without cleaning) in the next run.

The vessel was cooled to about 40°C with cold water, and ice and cold water were then used to cool the vessel to 10°C while stirring the resulting crystalline (NH₄)₂TiF_{6.}

The crystalline product was filtered and pressed inside the filter head to remove as much excess liquid as possible. The vacuum was then broken and ice water (50mℓ; 5°C) was added to the crystalline product. The vacuum could be restored only after the water had penetrated the fitter cake (approximately 2 minutes later) and the crystalline product had the appearance of icing-sugar. The crystalline product was then sucked and pressed as dry as possible.

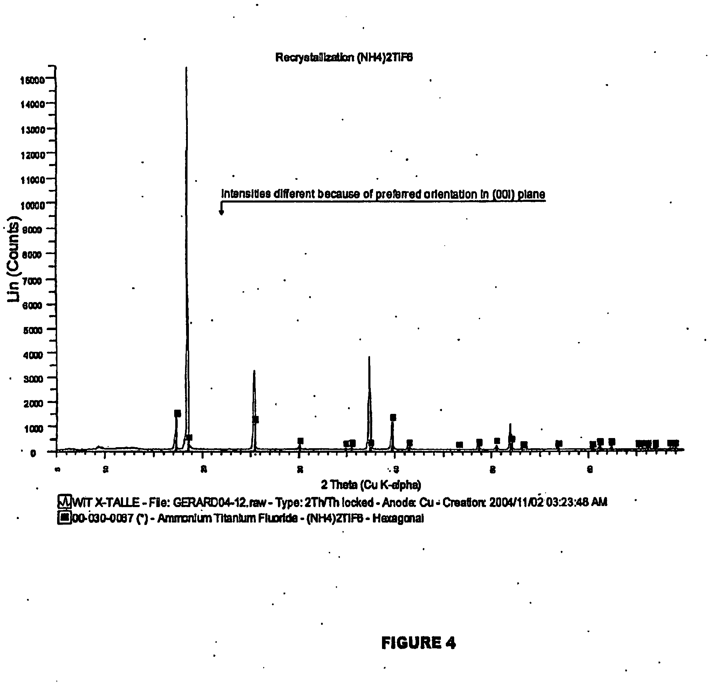

The resulting crystalline (NH₄)₂TiF₆ was dried at 60°C. The yield was typically about 70% of the feed crystalline product without evaporation of additional water. The XRD of this product is shown in Figure 4.

A crude but reliable way to test the purity of the dried crystalline (NH₄)₂TiF₆ was to add the product (approx 5g) to CP grade HCl (appox 25 mℓ; 32%) in a 50 mℓ glass beaker. After standing for about 5 minutes, the HCl turned yellow or orange if any iron was present. Concentrated HCl is very sensitive to iron and the intensity of the yellow or orange colour was directly proportional to the iron concentration at concentration levels between about 1% and 0.01% Fe. This test was carried out on the feed crystalline product, recrystallised product and (NH₄)₂TiF₆ standard.

### STEP 3: REDUCTION OF (NH₄)₂TiF₆WITH Al(Hg)

### Activation of Al with Hg

Aluminium buttons (ID approximately 10-15mm, 1-3mm thick, 150g) were covered with a 1 N NaOH solution in a 500mℓ plastic beaker and Hg (approximately 50mℓ) was added. The buttons were mixed using a plastic stirrer and dipped into the Hg. After about 5 minutes, the buttons were completely coated with Hg.

The sodium hydroxide was removed by rinsing the buttons with a strong flow of tap water inside the beaker for about 1 minute.

The excess Hg was then poured from the Hg-coated buttons through a 500µm screen and the buttons were immediately covered with acetone. After about 1 - 2 hours in acetone, further free Hg dropped from the buttons, leaving only a micro layer of Hg on the buttons.

When ready to use, the Al(Hg)-buttons were screened (500µm) from the acetone and free Hg, and immediately dropped into the (NH₄)₂TiF₆ solution as described below.

### Reduction

In a 2t vessel, the recrystallised (NH₄)₂TiF₆ from step 2 (500g) was dissolved in tap water (1.5ℓ). The temperature was raised to 30°C and a clear solution was obtained.

The Al(Hg)-buttons (150g) prepared as described above were added to the (NH₄)₂TiP₆ solution, while stirring (no vortex). The reaction was exothermic and the temperature rose from 30 to 70°C over a period of 75 minutes. After 15 minutes at 70°C, the suspension was cooled to below 30°C and filtered.

The Al(Hg)-buttons were rinsed with water and stored in acetone. The violet precipitate was filtered and sucked as dry as possible and washed with water (2 x 50mℓ).

The violet precipitate was dried at 60°C (yield 475g). The product consisted of NH₄TiF₄ and (NH₄)₃AlF₆ in a weight ratio of approx 75%:25%. NH₄TiF₄ has a low solubility in dilute HF and an even lower solubility in concentrated HF. In this way, if necessary, the (NH₄)AlF₆ (and other impurities) could be washed out of the product. The XRD of this clean product is shown in Figure 5.

It was also found that, if crude instead of pure (NH₄)₂TiF₆ was used, the Fe(II) present in the solution, plated onto the Al(Hg)-buttons and poisoned them. However, this only occurred after all of the Ti(IV) had been reduced to Ti(III). The Applicant believes that this method can be used to remove Fe, to the extent that recrystallisation of the (NH₄)₂TiF₆ may not be necessary. After reduction, the poisoned Al(Hg)-buttons could be re-activated by a dilute HCl leach to remove the Fe.

### STEP 4: DECOMPOSITION OF NH₄TiF₄AND (NH₄)₃AlF₆

The reduction product from step 3, consisting of a mixture of NH₄TiF₄ and (NH₄)₃AlF₆, was decomposed at 600°C under a nitrogen or argon atmosphere in a mild steel rotary. After 2-4 hours of soaking, the light brown-maroon product, consisting of TiF₃ and AlF₃, was completely free of NH₄F which had evaporated. The evaporated material was condensed and collected. It was found that, if traces of NH₄F remained, TiN formed during the reduction with Al at 750°C.

Depending on the ratio between NH₄TiF₄ and (NH₄)₃NF₆, the yield of the decomposed product was typically between 60 and 70% of the feed.

The XRD of clean TiF₃ produced from clean NH₄TiF₄ prepared as described above is shown in Figure 6.

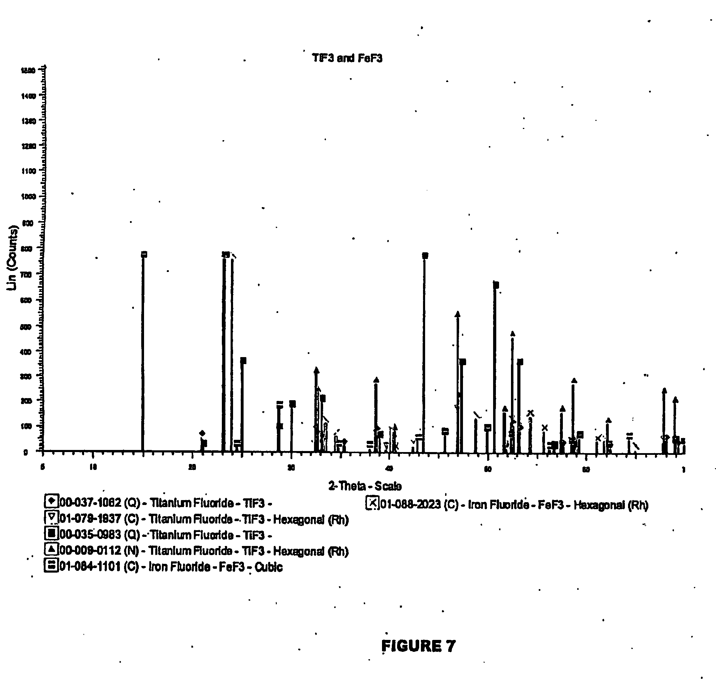

NH₄TiF₄ is a hitherto unknown salt and there is accordingly no data with which to compare the XRD powder pattern of NH₄TiF₄ as shown in Figure 5. The closest XRD fit to this salt is the XRD of NH₄FeF₄. It is therefore not unexpected that the decomposed product, TiF₃ of NH₄TiF₄ best matches the XRD powder pattern of FeF₃. The XRD powder patterns of standard samples of FeF₃ and TiF₃ are shown in Figure 7.

### STEP 5: REDUCTION OF TiF₃ WITH Al AND SUBLIMATION OF AlF₃

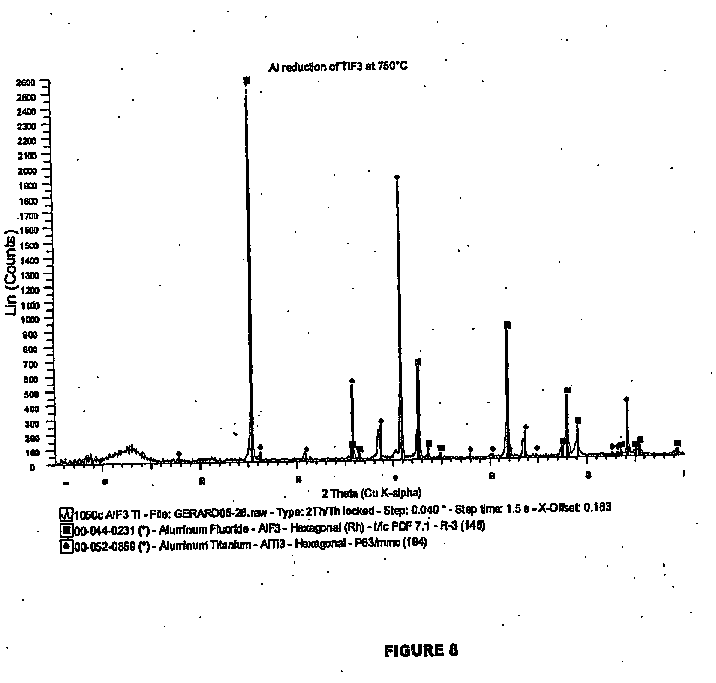

After determining the ratio between TiF₃ and AlF₃ in the product produced in step (4), Al-powder (<125µm) was mixed with the product. A stoichiometric amount of Al to TiF₃, was used (1mol : 1mol). The mixture was placed in a mild steel crucible under an argon atmosphere and heated to 750°C. After 2 hours of soaking, the reduction was complete without any change in mass. The XRD of this material is shown in Figure 8.

It was found that, for the reduction to be complete in a static unit, the coarsest Al powder that could be used was <125µm. It is expected that, in a rotary unit, liquid Al may completely wet the TiF₃ and thus complete the reduction. Alternatively, the Al may be dissolved in Zn to increase the surface area of the Al to complete the reduction. After reduction, the Zn could be evaporated at 950°C, condensed and reused in the next run.

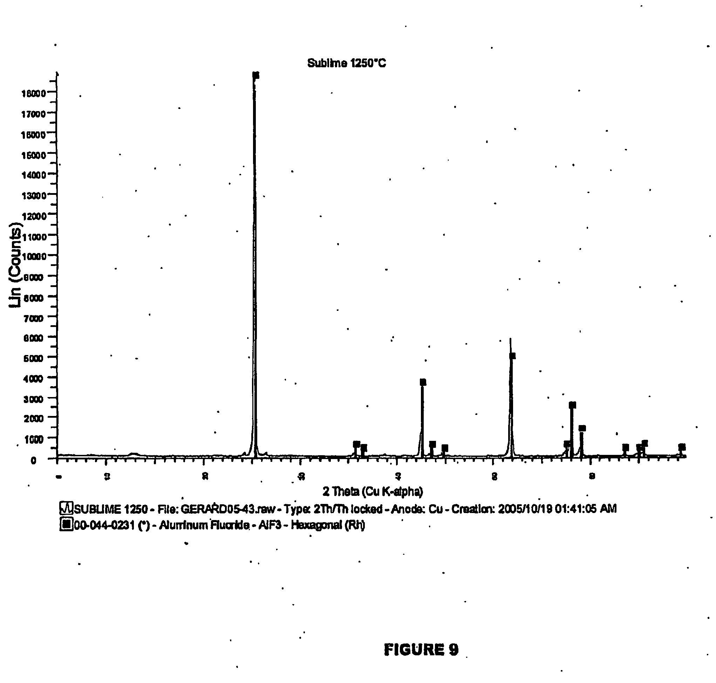

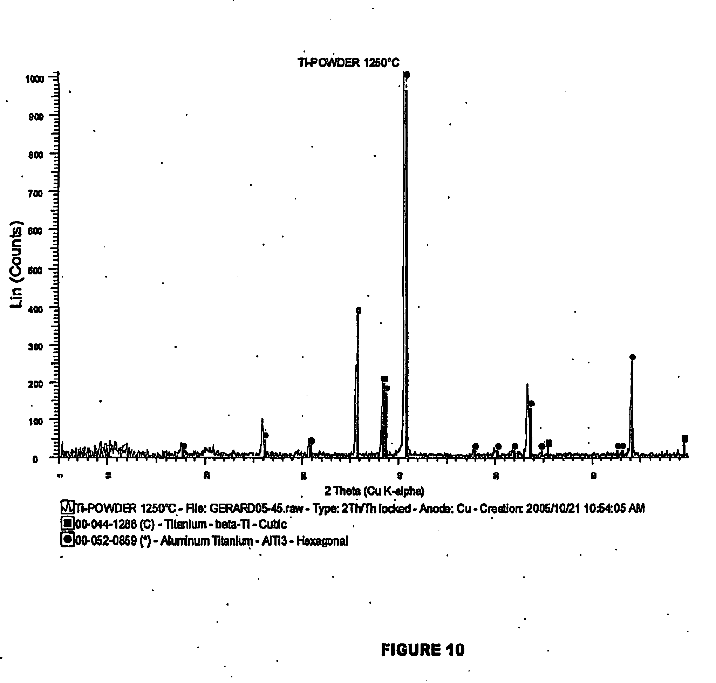

After reduction at 750°C, the temperature was raised to 1250°C, still under an argon atmosphere. At this temperature the AlF₃ sublimed and was condensed and collected as a pure by-product. The XRD of the AlF₃ is shown in Figure 9. When the production of white fumes stopped, the sublimation was complete. Depending on the batch size and surface area, soaking at this temperature was between 2 and 10 hours. After cooling, the product Ti-powder was collected. The XRD of the powder is shown in Figure 10.

The Applicant has found that complete sublimation of AlF₃ may be undesirable and that it is preferable to leave a trace amount (0.1 - 5%) to coat the Ti-powder. It was found that this fluoride coating protected the powder and increased safety when handling and transporting the powder. Prior art commercial Ti-powders have a spontaneous combustion temperature of approximately 250°C in air. However, this temperature is increased to >600°C if the inert AlF₃ layer is present When the powder is melted or sintered (powder metallurgy) the AlF₃ layer will sublime and not contaminate the titanium product.

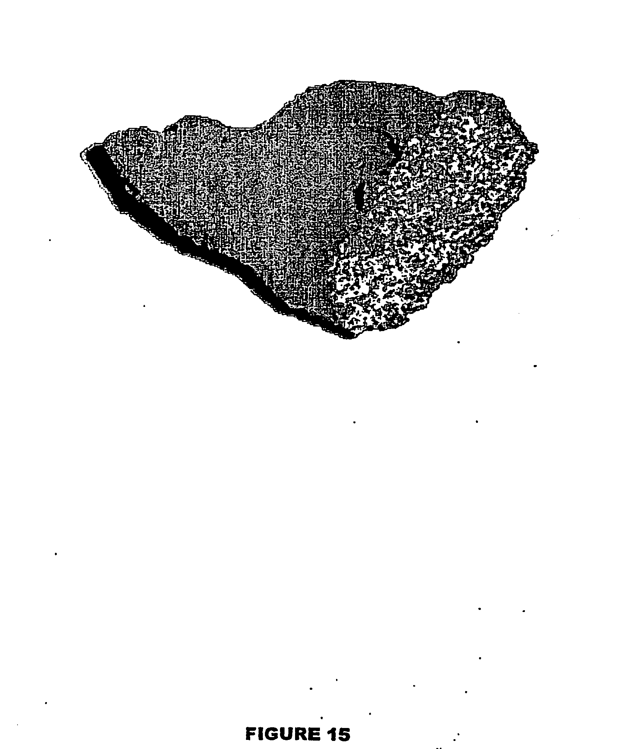

It was also found that a metal crust formed on top of the Ti-powder at 1250°C (refer to Figure 15). It is believed that this crust contains metal impurities which migrated with the AlF₃ gas to the surface of the powder and precipitated there as the AlF₃ sublimed, analogous to zone refining.

### STEP 6: MELTING OF Ti-POWDER

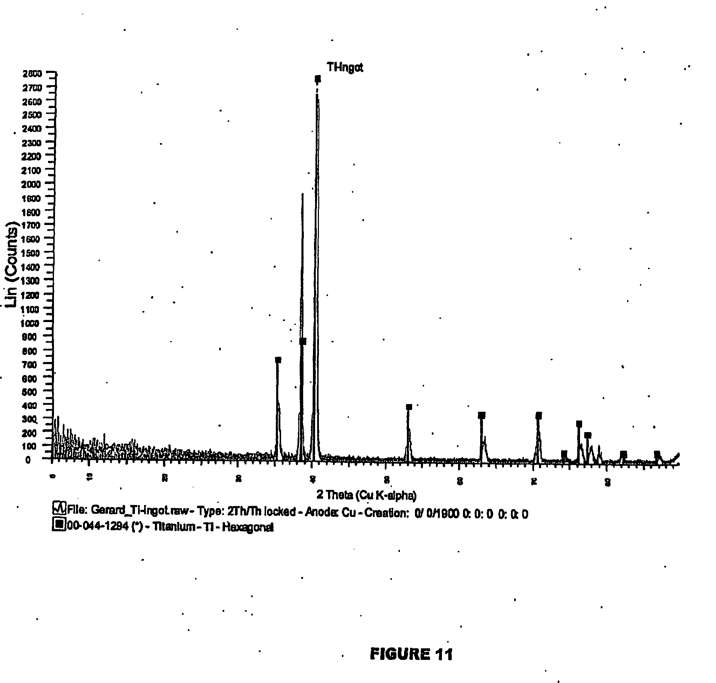

The Ti-powder produced in step (5) was pressed inside a zirconia lined clay crucible and melted in an induction furnace under an argon atmosphere. It readily melted to form a small ingot and a trace amount of AlF₃ in the form of fumes was produced. The XRD of the metal is shown in Figure 11. The Ti-powder or metal produced in this way contained very low levels (< Ti-grade 1) of oxygen, nitrogen, carbon and hydrogen due to the fluoride protection described above.

As can be seen from the XRD of the Ti-ingot, the process of the invention allows Ti to be produced by reduction with Al without the formation of Al-Ti alloys. Although the XRDs of the Ti-powder after reduction as shown in Figure 8 and after sublimation as shown in Figure 10, appear to reveal the presence of the AlTi₃ phase (instead of Ti phases only), the Applicant believes that the AlTi₃ phase which is apparently shown in the XRDs is only a pseudo AlTi₃ phase and that there is, in fact, no Al present The reason why the "Ti₃" has the AlTi₃ crystal structure is because it was "born" from Al and, at the low temperature used (<1300°C), there is not enough energy to rearrange the titanium crystal structure. Rearrangement of the titanium crystal structure only takes place when the Ti is melted or reacted with something else, such as N₂, to form TiN. Figure 12 shows the XRD where the Ti-powder was exposed to a limited amount of N₂ at 1350°C. As can be seen no Al or Al alloy phase was detected.

This was also confirmed by the fact that the XRD of the reduced Ti-powder with Al (Figure 8), showed that only the phases AlF₃ and AlTi₃ were present. Because a stoichiometric amount of Al to TiF₃ was used, if Al does, in fact, alloy with Ti to form AlTi₃, there should be 25% unreacted TiF₃ present and this does not show on the XRD.

The main reason why Ti can be reduced by Al without alloying is the fact that, during reduction, Al reacts with Ti(III) and not Ti(IV). The former reaction is moderately exothermic while the latter reaction is violently exothermic:

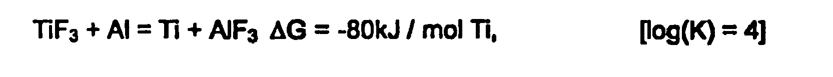

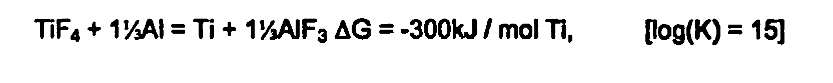

Alloying occurs when two metals are in contact with one another and there is enough energy to form an alloy.

In the first reaction the energy was too low to make alloying possible. The presence of AlF₃ also helped to maintain the temperature at less than 1100°C which is when AlF₃ starts to sublime thus absorbing the energy.

It is evident that the first electron reduction of Ti(IV) to Ti(III) is highly exothermic. In the process of the invention, that energy is absorbed in water during the controlled aqueous reduction of (NH₄)₂TIF₆ with Al(Hg).

### EXAMPLE 2

### PREPARATION OF TITANIUM-VANADIUM ALLOY

### STEP 1: PREPARATION OF NH₄VF₄ AND VF₃

To manufacture Ti-alloys, such as Ti-6Al-4V, the alloying elements in the form of their metal fluorides were mixed in the correct ratio with TiF₃ prior to reduction with Al. In the case of Ti - 6Al - 4V, VF₃ was added to TiF₃ and 6% excess Al was used during the reduction to produce the alloy-powder, after sublimation of AlF₃.

The V could not be introduced as VF₅ or VF₄ due to the low boiling points of these compounds since they would sublime before reduction could take place. It was therefore necessary to produce VF₃ as the V precursor as set out below.

NH₄VO₃ (58.5g) was added to water (300mℓ) and stirred. NH₄Cl (53,5g) and HF (40%; 130mℓ) were added to the resulting solution to produce a yellow solution.

Fe (14g, steel wool) was added to the solution to reduce the V(V) to V(IV). The reaction was exothermic and a blue solution was produced. After the reaction was completed, approximately 1 hour later, the solution was filtered to remove trace amounts of iron residue.

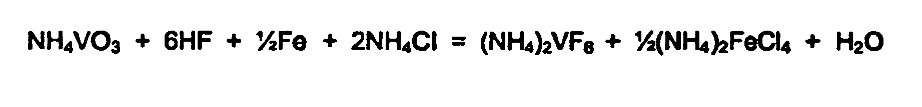

The temperature of the blue solution was adjusted to 20°C and then reduced with Al(Hg)-buttons. Over a period of approx 3 hours, the temperature increased to about 40°C. When the reduction of V(IV) to V(III) had completed, Fe plated onto the Al(Hg)-buttons and the reduction stopped.

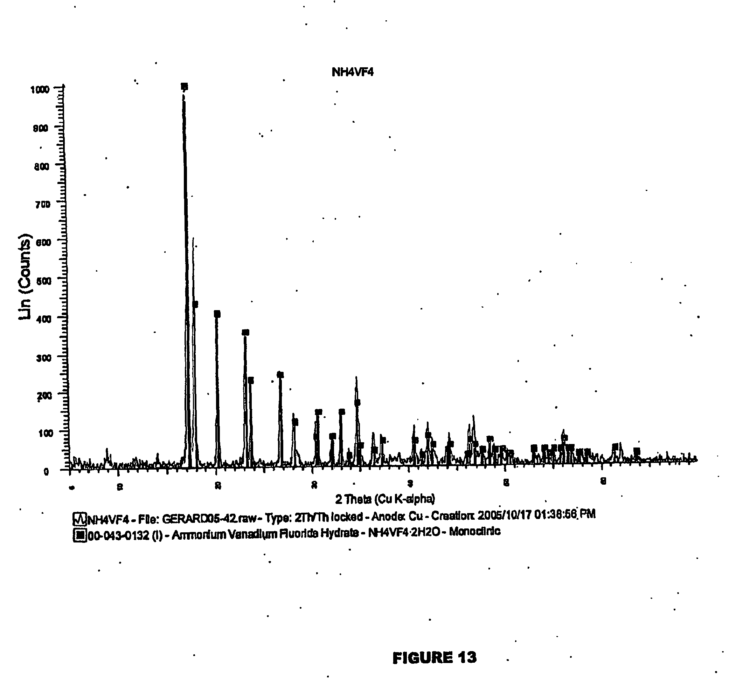

The resulting green suspension was then filtered and dried as for NH₄TiF₄ described above. The yield of peppermint green NH₄VF₄.2H₂O, was 67g. The XRD of this product is shown in Figure 13.

Al(Hg) was not used to reduce V(V) to V(IV) because the reaction was extremely violent and too much (NH₄)₃AlF₆ precipitated during the reaction.

### STEP 2: PREPARATION OF THE ALLOY

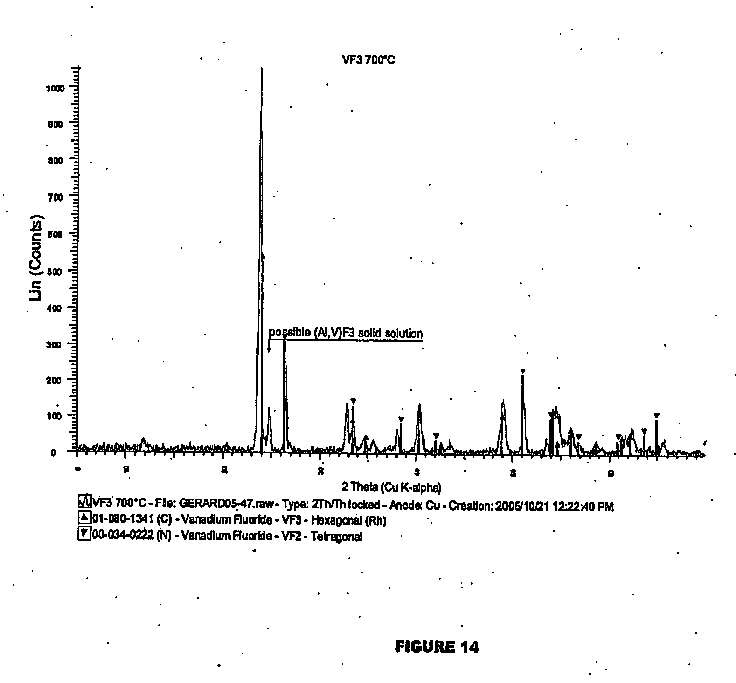

As for NH₄TiF_{4,} NH₄VF₄.2H₂O was also decomposed at 700°C to produce dark green VF₃ (+ AlF₃). The XRD of this product is shown in Figure 14. After establishing the ratio between VF₃ and AlF₃, this powder was mixed with TiF₃ (+ AlF₃) to produce the alloy powder after reduction and sublimation.

### EXAMPLE 3

### REGENERATION OF NH₄Cl FROM NH₄)₂FeCl₄SOLUTION

A problem which arises if Fe(OH)₂ is precipitated with NH₄OH from the (NHa)₂FeCl₄ solution produced as a by-product of the selective precipitation step, as described in step 2 of Example 1 above, is its solubility in high concentrations of NH₄Cl. This results in very slow precipitation. Furthermore, air oxidation of Fe(OH)₂ to FeO(OH) (low solubility in NH₄Cl) is slow and not practical and oxidation with H₂O₂ works well but the reagent is expensive.

The Applicant has found that the oxidation of Fe(II) to Fe(III) can be enhanced by conducting a current through the solution. The following reactions take place:

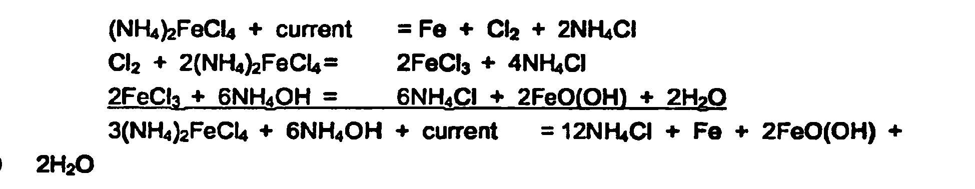

Accordingly, the pH of 1 litre of the (NH₄)₂FeCl₄ solution produced in the selective precipitation step was increased to 4 - 5 by addition of NH₄OH while stirring. As the solution / suspension was stirred, it was electrolysed using a car battery charger at a voltage of 6V and 2 graphite electrodes (any suitable electrodes can be used). A current of 6 - 9 amps was produced. This current also heated the solution to 60 - 70°C, which aided the reaction.

As the electrolysis progressed, the pH dropped and was frequently restored to 4 - 5 by addition of NH₄OH. During the process, no Cl₂ gas was produced as it was immediately converted to chloride by the oxidation of Fe(II) to Fe(III). After approximately 3 hours, the pH stopped dropping indicating that the reaction was complete. Overall, approximately 300 ml of NH₄OH (25%) was used.

Plated Fe was recovered from the cathode and a brown-orange precipitate was readily filtered off. After drying at 80°C, 200g of a product consisting mostly of FeO(OH) and some TiOF₂ and other impurities was obtained.

The filtrate was evaporated to yield NH₄Cl (310g). A crude mass balance indicated that more than 80% of the NH₄Cl was recovered without washing the filter cake.

The plated Fe could be used in the process when iron reduction was carried out after digestion and to produce FeTi if needed.

### EXAMPLE 4

### REGENERATION AND HF TOP-UP

The NH₄F collected after the decomposition of the NH₄-precursors at 600°C, as described in step (4) of Example 1, was reacted with a slaked lime solution to form a NH₄OH solution and precipitate CaF₂. NH₄OH was used in the regeneration of NH₄Cl from (NH₄)₂FeCl₄. The CaF₂ (fluorspar) produced can be sold as a by-product or treated with concentrated H₂SO₄ according to conventional processes to produce HF.

### EXAMPLE 5

### PRODUCTION OF (NH₄)₂TiF₆ FROM ANATASE PULP.

Crude anatase pulp (TiO₂.*x*H₂O) is a well-known product obtained by the aqueous hydrolysis of a Ti-solution. Essentially, all Ti feedstock materials can be converted to crude anatase pulp. To produce a concentrated solution of M^{II}TiF₆, it was necessary to add M^{II} to obtain a mole ratio close to 1 mol M^{II}: 1 mol Ti^{IV}. In this example M^{II} was Zn²⁺.

ZnO (40.7g, 0.5mol) was added to tap water (65 mℓ) and stirred until the ZnO was wetted. HF (130mℓ, 40%, 3 mol) was slowly added to the wetted ZnO. The reaction was exothermic and not all of the ZnO dissolved. TiO₂.2H₂O (69.6g, 0.6 mol) was then slowly added in four portions with vigorous stirring. The reaction was exothermic and the mixture started to boil. After addition of the third portion, a clear solution was obtained. After addition of the fourth portion, which contained excess pulp, a milky colour was produced. The use of an excess of the pulp ensured that all of the HF was consumed. After 1 hour, the solution was cooled to 40°C and filtered. The fitter cake was washed with water (1 x 20mℓ). NH₄Cl (117g, 2 mol) was added to the leachate, (approximately 200mℓ at 30°C) with vigorous stirring to produce (NH₄)₂TiF₆ by the following reaction:

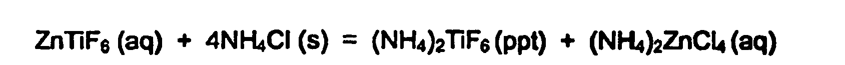

The temperature of the mixture initially dropped to below 5°C and, after approximately 15 minutes of stirring, the temperature rose to about 10°C and the mixture was filtered. The resulting crystalline (NH₄)₂TiF₆ was dried at 60°C to produce 80.25g of crystalline product. The yield was > 80%. Higher yields (greater than 90%) were produced when the process was scaled up.

Unexpectedly, it was found that (NH₄)₂TiF₆ was not produced if the order of the reaction was reversed. If the crude anatase pulp was first digested in HF to produce aqueous H₂TiF₆ and the ZnO was then slowly dissolved in the H₂TiF₆ solution, a clear solution was produced. However, when NH₄Cl (s) was added to the solution, the Ti did not precipitate as (NH₄)₂TiF₆ but instead, hydrolysis to a white insoluble precipitate occurred.

### EXAMPLE 6

### PRODUCTION OF (NH₄)₂TiF₆ FROM RUTILE, BROOKITE, LEUCOXENE AND

### TITANIFEROUS SLAG

Similar results were obtained when the process of Example 5 was followed for the production of (NH₄)₂TiF₆ using rutile, brookite, leucoxene or titaniferous slag.

### EXAMPLE 7

### PRODUCTION OF (NH₄)₂TiF₆ FROM ANATASE, RUTILE, BROOKITE, LEUCOXENE AND TITANIFEROUS SLAG

Similar results were obtained when the process of Example 5 was followed using MgO in place of ZnO for the production of (NH₄)₂TiF₆ from anatase, rutile, brookite, leucoxene or titaniferous slag.

### EXAMPLE 8

### PRODUCTION OF TITANIUM FROM ILMENITE VIA Na REDUCTION OF Na₂TiF₆

Referring to Figure 16, Ilmenite (800g) was digested, with stirring, with 20% aqueous HF (1.5ℓ) in a 2 litre polypropylene beaker with a loose lid. The slurry began to boil (100°C) after about ten minutes and boiled for about 5 minutes. The reaction mixture then began to cool. After 1 hour the temperature had dropped to 74°C. Steel wool (12g) was then added to reduce all iron(III) to iron(II) and the reaction mixture was stirred for another hour. The resulting saturated solution of FeTiF₆ (1 mol Ti = 438 mℓ leachate) was filtered to remove insoluble material and excess ilmenite (which was recycled). The resulting leachate (1.5ℓ) contained 164g of dissolved titanium. Solid NH₄Cl (49,4g ; 5% excess) was added to the leachate (876ml) and the temperature dropped to about 10°C. The resulting solution was stirred for 1 hour in a water bath at 20°C. Filtration produced (NH₄)₂TiF₆ (454g) as a moist white crystalline product containing 68g water (equal to a dry weight of 386g). The theoretical yield is 395.8g for 2 moles of (NH₄)₂TiF₆. The selective precipitation accordingly has an efficiency of 97.5% and produces a product with a purity of about 98%. The moist filter cake was then washed with a minimum amount of a saturated NH₄Cl solution (approximately 75ml), to yield a moist crystalline product (442g). This product contained about 66g of water (equal to a dry weight of 376g). indicating an efficiency of 95% and a purity of about 99%.

Water (332mℓ) was added to the moist crystalline product (442g) and the solution was boiled at 98°C. All of the crystalline product dissolved and the solution was then cooled to 10°C. The resulting mixture was filtered and the moist filter cake was washed with a minimum amount of ice water (approximately 60mℓ), to yield a moist recrystallised (NH₄)₂TiF₆ product (242g) containing about 37g water (equal to a dry weight of 205g and a purity of >99.9%). The mother lye and wash solution were recycled.

Dry NaCl (121,2g) and water (300mℓ) were added to the moist (NH₄)₂TiF₆ (242g) and stirred for 30 minutes and the mixture was filtered. The filter cake was washed with a minimum amount of a saturated NaCl solution (approximately 50ml) and dried at 60°C to yield very pure crystalline Na₂TiF₆ (210g).

This product was added to sodium metal (115g; 20% excess) in a 750ml stainless steel crucible fitted with a loose lid under an argon atmosphere. The crucible was placed in a muffle furnace (still under argon) and heated to about 700°C. At this temperature an exothermic reaction took place and the temperature spontaneously rose to about 900°C. The crucible was kept at about 900°C for a further 30 minutes to ensure that all of the excess sodium had evaporated, and then allowed to cool.

After the crucible had cooled to room temperature, the argon flow was stopped and a product consisting of NaF and titanium (about 270g) could be removed from the crucible (theoretical yield 300g) in the form of pieces having a size of about 2-15mm. Some of the product adhered to the crucible. This granular product was placed in a 250mℓ sealed zirconia crucible and heated to 1700°C under a closed argon atmosphere, for 10 min and allowed to cool to room temperature. A titanium ingot (approximately 40g; >99.9%) under a NaF slag was recovered.

The recycling of NaF was tested via a separate experiment. NaF (42g;-500um) and concentrated HCl (100mℓ; 32%) solution were added to a 250 ml beaker with a loose lid and stirred at room temperature for 2 hours to produce an aqueous HF solution. Fine crystalline NaCl (57g after drying at 120°C; >98%) was filtered from the solution (96mℓ). The HF was evaporated to a volume of 84ml to obtain a 20% HF solution ( indicating an efficiency of about 95%).

After the selective precipitation of (NH₄)₂TiF₆ from FeTiF₆ by the NH₄Cl, the filtrate contained the double salt (NH₄)₂FeCl₄ and some trace elements which behave in the same way as Fe. NH₄Cl was regenerated as described in Example 3.

HCl and NaOH were recovered by electrolysis of a saturated NaCl solution. This is a well known industrial process and is used for example at the Chloorkop installation in South Africa on a kiloton scale.

Sodium silicate was recovered from sodium hydroxide and silica as is well known in, for example, the glass industry, and the sodium silicate was converted to sodium via Si(Fe) according to known methods.

### EXAMPLE 9

### PRODUCTION OF TITANIUM FROM ILMENITE VIA Mg REDUCTION OF Na₂TiF₆

Referring to Figure 17, Ilmenite (800g) was digested, with 20% aqueous HF to produce a leachate as described in Example 1. Sodium sulphate (149g; 5% excess) was added to the leachate (438mℓ) and the solution was stirred for 1 hour at 20°C. The resulting suspension was filtered to produce a moist, white crystalline product which was washed with a minimum amount of a saturated Na₂SO₄ solution (approximately 3 x 25mℓ) and dried at 60°C, to give a crystalline Na₂TiF₆ product (195g ;indicating an efficiency of 94% and a purity of about 99%).

The dried crystalline Na₂TiF₆ product (195g) was added to magnesium filings (57g; 20% excess) in a 750mℓ stainless steel crucible with a loose lid under an argon atmosphere. The crucible was placed in a muffle furnace (still under argon) and heated to about 700°C. At this temperature an exothermic reaction took place and the temperature spontaneously rose to about 900°C. The temperature was then raised to about 1100°C and kept at this temperature for about 30 minutes to ensure that all of the excess magnesium evaporated, and then allowed to cool.

After the crucible had cooled to room temperature, the argon flow was stopped and the product consisting of a mixture of NaMgF₃ and titanium was recovered from the crucible. Because of the iron content of the precursor, only Ti-grade 4 was obtained by melting the product at 1700°C.

The recycling loops shown in Figure 17 are well known commercial processes.

### EXAMPLE 10

### PREPARATION OF TITANIUM NITRIDE, CARBIDE, BORIDE, HYDRIDE,

### SILICIDE, PHOSPHIDE AND SULPHIDE

The deactivated titanium powder of Example 1 was heated in the presence, respectively, of gaseous nitrogen, carbon in the form of carbon powder or coke, diborane, gaseous hydrogen, powdered silicon, phosphine and powdered sulphur to produce titanium nitride, carbide, boride, hydride, silicide, phosphide and sulphide respectively.

### ADVANTAGES

There are several clear advantages associated with the process of the invention when compared with prior art processes.
(1) Firstly, the process of the invention can use inexpensive starting materials, such as ilmenite, which is readily available in large quantities.
(2) The by-products produced in the process are all recycled and there is consequently very little overall reagent consumption.
(3) The process of the invention also provides a route to titanium which involves a protective fluoride coating as described above.
(4) It is a further advantage of the process of the invention that the intermediate (NH₄)₂TiF₆. which was previously not commercially available, is used instead of a precursor such as TiCl₄. The salt (NH₄)TiF₆ is stable in air and water, it is non-corrosive and is easy to prepare in an aqueous medium at ambient temperature. On the other hand, TiCl₄ is a very toxic liquid which decomposes violently in air and water and is highly corrosive. It is difficult to prepare, requiring temperatures of the order of 1000°C and is in the gas form during the reduction step. Titanium produced via TiCl₄ is expensive and is prone to contamination by O, N, H and C because of the absence of the fluoride coating associated with the method of the invention.
(5) It is a further major advantage that the titanium produced in accordance with the method of the invention has a cost comparable with that of high grade stainless steel.
(6) It is a further advantage that aluminium, which is substantially cheaper than either sodium or magnesium (as used in prior art processes), is used in the reduction step, without any aluminium alloy formation in the end product.
(7) Furthermore, the process of the invention produces titanium powder at a temperature well below the melting point of titanium. This results in substantially cheaper pyrometallurgical operations. This powder can then be used in classical powder metallurgy techniques to produce near net shape articles. This results in substantially less wastage when compared with prior art processes using titanium ingots. However, if titanium ingots are required the powder can readily be melted in a single stage melting process for example in an induction furnace because it is protected by the AlF₃ coating. The AlF₃ additionally acts as a flux during the melting of the powder.
(8) It is a particular advantage of the invention that, when preparing titanium alloys as described in Example 2, the other metal fluoride salt or salts can readily be homogeneously mixed with TiF₃ so that a homogeneous dispersion of the other metal or metals in the alloy is obtained. Prior art methods of producing homogeneous alloys by mixing the molten metals are practically very difficult.
(9) It is a further advantage of the invention that the process can be carried out using technical grade aqueous HF which is substantially cheaper than chemically pure aqueous HF.

Table 1 shows for comparison purposes the typical chemical composition, mechanical properties and physical properties of commercially available corrosion-resistant titanium alloys.

**TABLE 1 CHEMICAL COMPOSITION (NOMINAL %)**

| Grade | Carbon | Oxygen | Nitrogen | Iron | Al | V | Pd | Mo | Ni | Hydrogen |
|---|---|---|---|---|---|---|---|---|---|---|
| | Max | Max | Max | Max | | | | | | Max |
| 1 | 0.08 | 0.18 | 0.03 | 0.2 | | | | | | 0.015 |
| 2 | 0.08 | 0.25 | 0.03 | 0.3 | | | | | | 0.015 |
| 3 | 0.08 | 0.35 | 0.05 | 0.3 | | | | | | 0.015 |
| 4 | 0.08 | 0.40 | 0.05 | 0.5 | | | | | | 0.015 |
| 5 | 0.08 | 0.20 | 0.05 | 0.4 | 6 | 4 | | | | 0.015 |
| 7 | 0.08 | 0.25 | 0.03 | 0.3 | | | 0.20 | | | 0.015 |
| 9 | 0.05 | 0.12 | 0.02 | 0.25 | 3 | 2.5 | | | | 0.015 |
| 11 | 0.08 | 0.18 | 0.03 | 0.2 | | | 0.20 | | | 0.015 |
| 12 | 0.08 | 0.25 | 0.03 | 0.3 | | | | 0.3 | 0.8 | 0.015 |
| 16 | 0.08 | 0.25 | 0.03 | 0.3 | | | 0.05 | | | 0.015 |
| 17 | 0.08 | 0.18 | 0.03 | 0.2 | | | 0.05 | | | 0.015 |
| 18 | 0.05 | 0.15 | 0.03 | 0.25 | 3 | 2.5 | 0.05 | | | 0.015 |

### TYPICAL MECHANICAL PROPERTIES*

| Grade | Tensile | Yeld | % Elongation/2^{m} |
|---|---|---|---|
| | KSI Min | KSI Min/Max | Min |
| 1 | 35 | 25/45 | 24 |
| 2 | 50 | 40/65 | 20 |
| 3 | 64 | 55/75 | 18 |
| 4 | 80 | 70/95 | 15 |
| 5 | 130 | 120** | 10 |
| 7 | 50 | 40/65 | 20 |
| 9 | 90 | 70** | 15 |
| 11 | 35 | 26/46 | 24 |
| 12 | 70 | 50** | 12 |
| 16 | 50 | 40/85 | 20 |
| 17 | 35 | 25/45 | 24 |
| 18 | 90 | 70** | 15 |

| | | | |
|---|---|---|---|
| *Mill Annealed Condition **Minimum | | | |

### TYPICAL PHYSICAL PROPERTIES

| | Grade | Grade 5 | Grade 9 |
|---|---|---|---|
| | 1,2,3,4,7,11,12,16.17,18 | | |
| Density | 0.163 lb/in³ | 0.160lb/in³ | 0.162 lb/in³ |
| Modulus | 15 x 10⁸ psi | 16 x 10⁸ psi | 15 x 10⁸ psi |
| Beta Transus (±25°F) | 1635°F - 1735°F | 1800°F | 1715°F |
| Thermal Conductivity | 13-10 Btu/fl h °F | 4 Btu/ft h °F | 10 Btu/ft h °F |
| Thermal | 5.1 x 10⁻⁶/°F | 5.3 x 10⁻⁶/°F | 5.5 x 10⁻⁶/°F |
| Expansion | | | |
| (32-600°F) | | | |
| Melt temperature | 3000°F | 3000°F | 3000°F . |

### CONCLUSIONS

In summary, the Applicant has found that a very pure titanium precursor can be produced in high yield from ilmenite (which is the cheapest source of titanium) and that this precursor can be used to produce titanium metal with oxygen levels which are lower than those of commercial grade 1 titanium. The low oxygen content increases the malleability of the metal. The metal is also protected from oxidation during forging via a metal fluoride based coating. The Applicant believes that the method of the invention will allow titanium to be produced at a cost which is approximately the same as that of high-grade stainless steel. This would greatly increase the world market for titanium.

## Claims

1. A method of making titanium metal powder, the method including the step of
reducing TiF₃ with aluminium to produce a reduction product comprising titanium metal powder and AlF₃.

2. A method as claimed in claim 1 which includes the further step of heating the reduction product to a temperature and for a time which are sufficient to sublime off most of the AlF₃ but to cause retention of sufficient AlF₃ on the surface to reduce the reactivity of the titanium metal powder.

3. A method as claimed in claim 2, in which the reduction product is heated until the AlF₃ on the surface of the titanium metal powder comprises between 0,005 and 40% of the mass of the material.

4. A method as claimed in claim 2, in which the AlF₃ on the surface of the titanium metal powder comprises between 0,05 and 10,0% of the mass of the material.

5. A method as claimed in claim 2, in which the AlF₃ on the surface of the titanium metal powder comprises between 0,10 and 5,0% of the mass of the material.

6. Deactivated titanium powder having a surface layer of AlF₃ in which the AlF₃ comprises between 0,005% and 10% of the mass of the material.

7. Deactivated titanium powder as claimed in claim 6, in which the AlF₃ comprises between 0,05% and 10% of the mass of the material.

8. Deactivated titanium powder as claimed in claim 6, in which the AlF₃ comprises between 0,10% and 5% of the mass of the material.

9. A method of making titanium metal powder, the method including the steps of
reducing TiF₃ with aluminium to produce a reduction product comprising titanium metal powder and AlF₃; and
heating the reduction product to sublime off the AlF₃ to produce a titanium metal powder containing essentially no aluminium in metal or alloy form.

## Patentansprüche

1. Verfahren zur Herstellung von Titanmetallpulver, wobei das Verfahren den folgenden Schritt aufweist:
das Reduzieren von TiF₃ mit Aluminium, so dass ein Reduktionsprodukt erzeugt wird, das Titanmetallpulver und AlF₃ umfasst.

2. Verfahren nach Anspruch 1, wobei dieses den weiteren Schritt des Erhitzens des Reduktionsprodukts auf eine Temperatur und über eine Zeit aufweist, die ausreichen, um den Großteil des AlF₃ auszusublimieren, wobei jedoch eine Retention von ausreichend AlF₃ auf der Oberfläche bewirkt wird, um die Reaktivität des Titanmetallpulvers zu reduzieren.

3. Verfahren nach Anspruch 2, wobei das Reduktionsprodukt erhitzt wird, bis das AlF₃ auf der Oberfläche des Titanmetallpulvers zwischen 0,005 und 40 Prozent der Materialmasse umfasst.

4. Verfahren nach Anspruch 2, wobei das AlF₃ auf der Oberfläche des Titanmetallpulvers zwischen 0,05 und 10,0 Prozent der Materialmasse umfasst.

5. Verfahren nach Anspruch 2, wobei das AlF₃ auf der Oberfläche des Titanmetallpulvers zwischen 0,10 und 5,0 Prozent der Materialmasse umfasst.

6. Deaktiviertes Titanpulver mit einer Oberflächenschicht aus AlF₃, wobei das AlF₃ zwischen 0,005 und 10,0 Prozent der Materialmasse umfasst.

7. Deaktiviertes Titanpulver nach Anspruch 6, wobei das AlF₃ zwischen 0,05 und 10,0 Prozent der Materialmasse umfasst.

8. Deaktiviertes Titanpulver nach Anspruch 6, wobei das AlF₃ zwischen 0,10 und 5,0 Prozent der Materialmasse umfasst.

9. Verfahren zur Herstellung von Titanmetallpulver, wobei das Verfahren die folgenden Schritte aufweist:
das Reduzieren von TiF₃ mit Aluminium, so dass ein Reduktionsprodukt erzeugt wird, das Titanmetallpulver und AlF₃ umfasst; und
das Erhitzen des Reduktionsprodukts, um das AlF₃ auszusublimieren, so dass ein Titanmetallpulver erzeugt wird, das im Wesentlichen kein Aluminium in Metall- oder Legierungsform enthält.

## Revendications

1. Un procédé de fabrication de poudre de titane, ce procédé incluant l'étape de réduction de TiF₃ par de l'aluminium pour produire un produit de la réduction comprenant de la poudre de titane et AlF₃.

2. Un procédé tel que revendiqué dans la revendication 1, qui inclut l'étape ultérieure de chauffage du produit de la réduction à une température et pour une durée suffisante pour séparer par sublimation la plus grande partie de AlF₃ tout en provoquant la rétention de suffisamment de AlF₃ sur la surface pour abaisser la réactivité de la poudre de titane.

3. Un procédé tel que revendiqué dans la revendication 2, dans lequel le produit de la réduction est chauffé jusqu'à ce que AlF₃ sur la surface de la poudre de titane comprenne de 0,005 à 40% de la masse du matériau.

4. Un procédé tel que revendiqué dans la revendication 2, dans lequel AlF₃ sur la surface de la poudre de titane comprend de 0,05 à 10,0% de la masse du matériau.

5. Un procédé tel que revendiqué dans la revendication 2, dans lequel AlF₃ sur la surface de la poudre de titane comprend de 0,10 et 5,0% de la masse du matériau.

6. Poudre de titane désactivée présentant une couche surfacique de AlF₃ dans laquelle AlF₃ comprend de 0,005% à 10% de la masse du matériau.

7. Poudre de titane désactivée telle que revendiquée dans la revendication 6, dans laquelle AlF₃ comprend de 0,05% à 10% de la masse du matériau.

8. Poudre de titane désactivée telle que revendiquée dans la revendication 6, dans laquelle AlF₃ comprend de 0,10% à 5% de la masse du matériau.

9. Un procédé de fabrication de poudre de titane, ce procédé incluant les étapes de réduction de TiF₃ par l'aluminium pour obtenir un produit de la réduction comprenant de la poudre de titane et AlF₃ ; et le chauffage du produit de la réduction pour éliminer par sublimation AlF₃ de façon à produire une poudre de titane contenant pratiquement pas d'aluminium sous forme de métal ou d'alliage.
